# EUROPEAN PATENT APPLICATION

(11) **EP 4 804 375 A1**
(43) Date of publication of application: **09.09.2026**
(21) Application number: 25161432.7
(22) Date of filing: 03.03.2025
(51) Int. Cl.: H02J 7/00, H02J 7/34

(54) **A SUPERCAPACITOR BANK SYSTEM AND VOLTAGE BALANCING METHOD OF THE SUPERCAPACITOR BANK SYSTEM**

(71) Applicant: University of Zagreb Faculty of Electrical Engineering and Computing, 10000 Zagreb (HR)
(72) Inventor: Makar, Martin, 10000 Zagreb (HR); Kutija, Martina, 10000 Zagreb (HR)
(74) Representative: Sucic, Tatjana

(57) **Abstract**

The present invention relates to an electrical energy storage system, particularly to a supercapacitor bank system comprising a plurality of series-connected supercapacitor cells. Further, the present invention relates to a voltage balancing circuit and a voltage balancing method of the supercapacitor bank system. The voltage balancing circuit (100; 200) includes a current controlled AC source (101; 201) configured to supply a controlled balancing current and wherein the current-controlled AC source (101; 201) includes a current-controlled DC-DC conversion circuit (204); a DC-AC conversion circuit (205) and a common AC bus (102; 202); a plurality of module units *Mᵢ*; and a plurality of supercapacitor cells *SC*ᵢ, wherein all of the plurality of supercapacitor cells *SC*ᵢ are electrically connected in series, each of the plurality of supercapacitor cells *SCᵢ* being electrically connected and associated with a respective module unit *Mᵢ*. The voltage balancing circuit (100; 200) is configured to balance the voltage of one or more series-connected supercapacitor cells *SCᵢ* by conducting the balancing current from supercapacitor bank (104; 207) to supercapacitor cells *SCᵢ* with a lower voltage over the module units *Mᵢ*, until all of the supercapacitor cells *SCᵢ* have the same voltage. The present invention relates also to a voltage balancing method, wherein the voltage balancing circuit (100; 200) and method operate on a principle of applying a current-controlled alternating current source, common AC bus, transformers and rectifying circuits.

## Description

### FIELD OF THE INVENTION

The present invention relates to an electrical energy storage system, particularly to a supercapacitor bank system comprising a plurality of series-connected supercapacitor cells. The invention further encompasses a voltage balancing circuit and a voltage balancing method applicable to the supercapacitor bank system. The supercapacitor bank system may be configured as a plurality of series-connected supercapacitor cells or as a plurality of parallel-connected branches, each branch comprising the plurality of series-connected supercapacitor cells. This configuration forms the supercapacitor bank, with the voltage balancing circuit and method being integral components of the supercapacitor bank system.

### BACKGROUND OF THE INVENTION

Supercapacitor cells are typically designed to operate within a maximum voltage (rated voltage) range of approximately 2 V to 3 V, depending on their construction and material composition. Exceeding the maximum voltage can significantly reduce an expected lifespan of the supercapacitor cell and, in some cases, result in permanent damage. An operational lifetime of the supercapacitor cell is closely related to its working voltage, the maximum value of which is selected based on the expected lifespan and performance requirements of an overall supercapacitor bank. The working voltage is intentionally set below the rated voltage to enhance reliability and extend the lifespan of the supercapacitor cell.

To efficiently utilize stored energy, an operating voltage range of the supercapacitor cell is commonly defined between half of the maximum working voltage and the maximum working voltage itself, allowing for the extraction of approximately 75% of the stored energy. However, in certain applications, the operating voltage may be extended below half of the maximum working voltage to further increase an energy utilization. As a result, depending on a specific application and design considerations, the operating voltage range of the supercapacitor cell may vary from below 1 V up to 2 V or 3 V.

When an electrical energy storage at higher operating voltages is required, the supercapacitor cells must be connected in series to form a supercapacitor bank. However, due to material imperfections and variations in the manufacturing process, individual supercapacitor cells, even those from the same production batch, exhibit deviations in key electrical characteristics. Variations in parameters such as capacitance, equivalent series resistance (ESR), and leakage current can lead to voltage imbalances among a series-connected supercapacitor cells during charging, potentially affecting performance and reliability.

For this reason, when the supercapacitor cells are connected in series, the stored energy within the supercapacitor bank is not uniformly distributed across all cells, resulting in voltage differences among them. This uneven voltage distribution can subject certain supercapacitor cells to excessive electrical stress, which may lead to irreversible damage involving both the structural and operational integrity of the entire supercapacitor bank. Exceeding a permissible voltage threshold accelerates cell degradation, reduces lifespan, and may ultimately cause permanent failure of individual cells, thereby jeopardizing the functionality of the entire supercapacitor bank. Accordingly, to ensure reliable operation and longevity, a voltage balancing system is required to maintain a uniform voltage distribution among the supercapacitor cells.

The voltage balancing issue of the supercapacitor bank is critical in high-voltage energy storage applications, including but not limited to electric vehicles, plug-in hybrid vehicles, and grid-connected energy storage systems, wherein the operating voltages may reach 1000V or higher. Achieving these high voltage levels requires connecting several tens to several hundreds of the supercapacitor cells in series. Additionally, high power demands in these applications may necessitate the supercapacitor banks comprising a plurality of parallel-connected branches of the series-connected supercapacitor cells. The present invention is particularly suited for such applications, as it enables voltage balancing without requiring individual voltage measurements for each supercapacitor cell, thereby simplifying system architecture and significantly reducing costs.

Compared to battery cells, the supercapacitor cells operate at lower voltages, exhibit lower equivalent series resistance (ESR), charge and discharge more rapidly, and endure significantly higher power cycles. As a result, a required balancing current for the supercapacitor cells is higher than that required for the battery cells, as voltage imbalance must be corrected more quickly. A magnitude of the balancing current for the supercapacitor cells is primarily determined by manufacturing tolerances of supercapacitor cells and by a magnitude of a charging/discharging current. Consequently, a required balancing current is directly dependent on the charging/discharging current and may reach values of approximately 10-20% of the charging/discharging current.

Conventional systems typically set the balancing current to a fixed value without the capability of adjusting it dynamically based on variations in the charging/discharging current. Additionally, an excessive balancing current can contribute to an increased heating of the supercapacitor cell. A balancing time is inversely proportional to the value of the balancing current. Specifically, a decrease in the balancing current results in an increase in the balancing time, while an increase in the balancing current leads to a reduction in the balancing time. Furthermore, fluctuations in the balancing current may result in an increase in the balancing time, as compared to maintaining a constant balancing current value. If the balancing current is not controlled, the balancing time cannot be controlled ether.

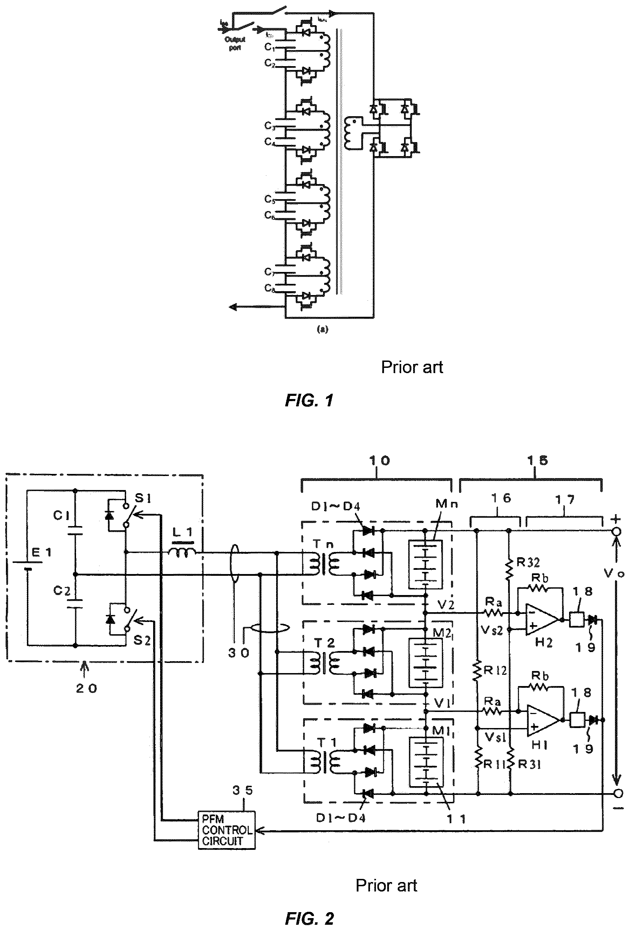

Paper titled "Analyzing the need for a balancing system in supercapacitor energy storage systems", Ibanez F.M et al. [2018] discloses equalizing circuits in energy storage systems (ESSs), particularly in supercapacitor arrays. The disclosure evaluates the benefits and drawbacks of incorporating equalizing circuits and presents a probabilistic study that quantifies the additional energy storage capacity achievable with an equalizing system. The paper further examines various equalizing systems and discloses a fast-charging circuit that permits the energy storage system to charge at power levels comparable to those during discharge. The paper is directed to providing guidance for selecting an appropriate equalizing system in applications such as electric vehicles or microgrids. The paper proposes a fast-charging method illustrated in Figure 1 where a transformer with N secondary windings is employed; however, this configuration is complex to manufacture and limits the possible number of cells that may be balanced. Moreover, the paper utilizes the charging current for balancing, rather than an independent current source, thereby restricting balancing to the charging phase.

In view of the disadvantages described above, the present invention is directed to a supercapacitor bank system with the voltage balancing circuit that is simple, modular, and easy to manufacture. An object of the present invention is to control the balancing current and employ full-wave rectification rather than half-wave rectification per cell, thereby reducing charging current ripple and permitting higher balancing currents.

A paper by Altemose, G., Hellermann, P., & Mazz, T. [2011, May], entitled "Active cell balancing system using an isolated share bus for Li-lon battery management: Focusing on satellite applications" discloses a battery voltage balancing circuit that utilizes an AC bus, which is similar to the present invention. However, in the disclosed system, the balancing current is determined by the differences in cell voltages and circuit resistances, whereas in the present invention the balancing current is independent of cell voltage. Furthermore, the cited paper does not employ a current-controlled alternating current (AC) source for balancing the cell voltages.

While batteries also require voltage balancing systems, the distinct energy storage mechanisms of batteries and supercapacitors necessitate significantly different design and operational considerations. A challenge with applying voltage balancing circuits designed for batteries on supercapacitors is that they are typically engineered for smaller balancing currents and higher operating voltages than those encountered in supercapacitors. Supercapacitors typically operate at lower voltages compared to batteries, which can have higher cell voltages depending on the type. While battery balancing circuits can sometimes be adapted for use with supercapacitors, they must be modified to account for the unique characteristics of supercapacitors. Supercapacitor balancing circuits often focus on fast balancing, low complexity, and minimal component count to ensure reliability and cost-effectiveness. Additionally, supercapacitors are commonly used in applications requiring rapid charging and discharging, and balancing circuits for supercapacitors must support these high-power applications efficiently.

Active voltage balancing systems and methods for the supercapacitor banks can be classified according to the mode of an energy transfer employed. An energy may be transferred between neighboring supercapacitor cells, between any two supercapacitor cells in a single cycle, continuously among all supercapacitor cells, or between the supercapacitor bank and individual supercapacitor cells. The energy transfer between the supercapacitor bank and individual supercapacitor cells can involve supplying energy from the supercapacitor bank to the supercapacitor cells with lower voltage, or transferring the energy from the supercapacitor cells with higher voltage to the supercapacitor bank. In the present invention, the energy transfer is facilitated between the supercapacitor bank and individual supercapacitor cells to achieve voltage balancing. Specifically, the energy from the supercapacitor bank is directed to the supercapacitor cells requiring balancing, ensuring uniform voltage distribution across the cells.

In an electricity storage system, as illustrated in FIG. 2 of US Patent No. 8,928,283, said document disclosing a system comprising storage cells 10, isolation transformers T1, T2, ..., Tn, and rectifying circuits D1-D4 that are associated with each storage module. A voltage balancing circuit generates an alternating current by switching a direct-current power source E1. The primary windings of the isolation transformers are connected in parallel and electrically coupled to the output of a voltage balancing circuit via a common wiring. The secondary windings of the isolation transformers are connected to the respective storage modules through the corresponding rectifying circuits. The alternating current is supplied to the primary windings of each isolation transformer. A resonant current generating circuit 20 that generates an alternating current by switching a direct-current power source. Additionally, a difference detecting circuit 17 measures the voltage difference between a voltage dividing circuit and intermediate voltages V1 and V2, and a detecting circuit 18 generates a control signal for a pulse frequency modulation (PFM) unit 35 that sets the frequency of the alternating current source.

The background technologies described above have disadvantages described below.

The voltage balancing circuit described in US Patent No. 8,928,283 is primarily suitable for batteries and its application to supercapacitors presents several challenges. One key difficulty is that the circuit is designed for cell modules with higher voltages, as these cell modules are preferably composed of multiple cells connected in series, and the author suggests that it is preferable for modules to consist of multiple cells. In contrast, supercapacitors are balanced on a per-cell basis, with each cell being individually balanced. The author also notes that a cell module may consist of a single storage cell. It notes that in such a case, the electromotive force (charging and discharging voltage) of the cell module is lower, making it preferable for the rectifying circuits (D1 to D4) to be composed of MOSFETs with low ON resistance, rather than diodes with higher forward voltages. Supercapacitor rated voltages are lower than battery rated voltages, and operating voltages can further decrease significantly during operation, rendering the application of this circuit to supercapacitors hardly feasible. Replacing the diodes with controlled switches introduces additional complexity and cost, making the solution less viable for supercapacitor banks consisting of tens or hundreds of cells. Furthermore, the invention necessitates the measurement of the voltage of each individual cell, which increases the complexity of the system, particularly as the number of supercapacitor cells increases.

In the present invention, terminal voltages of the supercapacitor cells are estimated rather than measured individually, in order to maintain system simplicity and reduce costs, particularly when managing tens or hundreds of supercapacitor cells.

In embodiments where the energy is sourced from an external source to perform balancing, there exists a risk of overcharging the supercapacitor bank under certain conditions. This approach is more suitable for batteries, which typically charge at a slower rate compared to supercapacitors. Supercapacitors, in most cases, require faster charging and higher balancing currents, which may present challenges in managing a risk of overcharging.

In embodiments employing a resonant converter to generate an alternating current from a direct current, the feedback loop is limited to binary states (0 or 1), which precludes adjusting the magnitude of the generated alternating current. As a result, the voltage balancing circuit may produce a higher or lower balancing current than necessary, and it lacks the ability to control the balancing current. In the present invention, a current-controlled AC source is utilized to provide precise control over the magnitude of the balancing current. The ability to accurately adjust the balancing current magnitude may reduce power dissipation during low charging and discharging currents, contributing to improved efficiency and performance of the electrical energy storage system.

In embodiments wherein the current produced by the alternating-current source is dependent on the component values of both the AC source and the electricity storage system, an output current is inherently variable during a voltage balancing. In supercapacitor-based electrical energy storage systems, it is critical that the balancing current remains independent of the cell voltages within the supercapacitor bank. Additionally, the balancing current must have a magnitude sufficient to achieve the required balancing times in fast charging/discharging applications where the above mentioned disadvantages are more significant. Furthermore, when the direct-current source is supplied from an independent voltage source, the balancing circuit draws the energy from the external source instead of from the supercapacitor bank. This configuration may result in overcharging of the supercapacitor cells if the supercapacitor bank is fully charged or near its maximum charge capacity.

For supercapacitor-based systems employed in high-voltage and high-power applications, it is critical that the balancing current is stable and well-defined, and that the voltage balancing system is operable at elevated voltages (e.g., 100 V to 1000 V or higher). Furthermore, if the direct-current voltage source represents a supercapacitor bank voltage, a DC-DC converter must be employed to step down the supercapacitor bank voltage to a level suitable for subsequent conversion into alternating current.

Patent US 8,928,283 discloses that when the cell module voltage is low, it is preferable for the rectifying circuits (D1-D4) to be implemented using MOSFETs. However, such an arrangement requires synchronous rectification, thereby increasing system complexity. In contrast, the present invention utilizes transformers with two secondary windings, enabling rectification with only two diodes and reducing the voltage drop of the rectification circuit.

In supercapacitor-based applications, connecting supercapacitor modules in parallel is essential to achieve higher power outputs; however, Patent US 8,928,283 does not disclose a means to control a common AC bus current, which may unpredictably increase when additional modules are connected in parallel.

In contrast to conventional voltage balancing systems for supercapacitors, which rely on measuring voltage to monitor and correct energy distribution, the present invention achieves an energy distribution without the need for prior voltage measurement of each cell. Furthermore, a system and method of the present invention are characterized by simplicity-requiring only voltage measurement of a supercapacitor bank, reducing a number of components, and employing simplified interconnections-while enabling active adjustment of the balancing current without the need to control each module individually. If balancing current is kept constant, a voltage balancing of a plurality of supercapacitor cells at low cell voltages is achievable, enabling a continuous voltage balancing within the supercapacitor bank. Additionally, adjusting the balancing current allows it to be optimized according to the charging current and expected capacity variations, thereby ensuring optimal voltage balancing of cells within the supercapacitor bank and achieving enhanced efficiency.

In view of the disadvantages described above, the present invention is directed to a supercapacitor bank system, voltage balancing circuit and voltage balancing method for the series-connected supercapacitor storage cells which may also be configured as one or more of parallel-connected branches of the series-connected supercapacitor cells. According to one aspect of the present invention, a theoretically unlimited number of cells may be balanced using a minimal number of energy conversion components. The system features a simple, modular design, is operable at low voltages, and provides a balancing current control.

Compared to existing solutions, the voltage balancing system and method of the present invention ensure better performance in terms of efficiency and maintenance, lower technological requirements for production, and consequently easier implementation. The invention also features a smaller number of components, faster and more cost-effective production, a longer lifespan, and a simple capability to adapt to individual user requirements through modular design.

### SUMARY OF THE INVENTION

The present invention relates to supercapacitor bank system including a supercapacitor bank comprising one or more parallel-connected branches, each branch comprising a plurality of series-connected supercapacitor cells *SCᵢ*, and a voltage balancing circuit. The voltage balancing circuit comprising: current-controlled AC source configured to supply a balancing current to the plurality of series-connected supercapacitor cells *SCᵢ* forming a supercapacitor bank, wherein the supercapacitor bank is connected to a bidirectional power source for charging and discharging, and wherein the current-controlled AC source is supplied by the supercapacitor bank; a common AC bus; a plurality of module units *Mᵢ*, wherein all module units *Mᵢ* are connected in parallel to the common AC bus on one side, and each module unit *Mᵢ* is connected to a respective supercapacitor cell *SCᵢ* on another side, wherein a number of module units *Mᵢ* is equal to a total number of supercapacitor cells *SCᵢ*. The current-controlled AC source is connected directly to the common AC bus, the current-controlled AC source further comprises a current-controlled DC-DC conversion circuit connected directly to the supercapacitor bank, a DC-AC conversion circuit configured to convert a controlled DC current into an AC current and connected directly to the common AC bus and via the common AC bus is connected to the plurality of module units *Mᵢ*.

The current-controlled DC-DC conversion circuit is configured to regulate a magnitude of the balancing current, wherein the DC-AC conversion circuit is configured to generate an AC current supplied to the common AC bus; and the voltage balancing circuit is configured to balance an uneven voltage distribution across the plurality of series-connected supercapacitor cells *SCᵢ* by conducting the balancing current from the supercapacitor bank to one or more series-connected supercapacitor cells *SCᵢ* with a lower voltage through the plurality of module units *Mᵢ* while detecting a voltage unbalance, wherein said voltage unbalance detection is based on a comparison between an estimated common AC bus voltage during operation and the estimated common AC bus voltage in a balanced state, wherein both estimations are derived using a measured voltage of the supercapacitor bank, wherein the series-connected supercapacitor cells *SC*ᵢ with the lower voltage receive an energy from the common AC bus, and wherein when an even voltage distribution across all supercapacitor cells *SCᵢ* is achieved, all supercapacitor cells *SCᵢ* receive the energy from the common AC bus, which is supplied by an alternating current form the current-controlled AC source.

In accordance with the present invention, the DC-DC conversion circuit includes the DC-DC converter and a DC-AC conversion circuit includes a Current Source Inverter or a Voltage Source inverter. Further, each module unit *Mᵢ* includes a transformer and a rectifying circuit.

In accordance with the present invention, the current-controlled AC source further comprises a control circuit configured to receive a balancing current reference value from a superior system, or to utilize a preset balancing current reference value set within the control circuit, or to dynamically adjust the balancing current reference value based on a charging current of the plurality of supercapacitors *SCᵢ*, or wherein the balancing current reference value may be set using alternative methods, including but not limited to manual input, external signal processing, or through an optimization algorithm with various objectives, such as, but not limited to, balancing speed, energy efficiency, thermal management, and overall system performance.

The present invention also relates to a voltage balancing method of a supercapacitor bank system.

The present invention provides a voltage balancing method for a supercapacitor bank system configured to equalize voltage variations among series-connected supercapacitor cells using an estimation-based control approach. The method involves supplying a balancing current through a current-controlled AC source, dynamically applying a voltage across module units, and regulating the voltage using a current control method within a closed-loop control system.

The method utilizes estimation techniques to determine the balanced state of the supercapacitor cells and may adjust the balancing current reference value accordingly. The balancing current reference value may be received from a superior system, preset within the control circuit, dynamically adjusted based on the supercapacitor charging current, or set by manual input, external signals, or an optimization algorithm with objectives including balancing speed, energy efficiency, thermal management, and system performance. The method ensures effective energy transfer from the common AC bus to the lowest voltage supercapacitor cells, achieving uniform charge.

### BRIEF DESCRIPTION OF DRAWINGS

The accompanying drawings, which are incorporated in and constitute a part of the specification, illustrate one or more embodiments and, together with the description, explain these embodiments. In the drawings:
Figs. 1 and 2 illustrate some prior art balancing structures;
Fig. 3 shows a schematic diagram illustrating a simplified representation of the voltage balancing system for a plurality of series-connected supercapacitors according to an embodiment of the present invention;
Fig. 4 illustrates a simplified representation of the voltage balancing system, in which a supercapacitor bank is configured as plurality of parallel-connected branches of series-connected supercapacitor cells in accordance with the present invention;
Fig. 5 shows a schematic diagram illustrating a voltage balancing system for a plurality of series-connected supercapacitors according to an embodiment of the present invention in case a current-controlled AC source is based on voltage source inverter; and
Fig. 6 schematically illustrates a supercapacitor bank in accordance with the present invention.

### DETAILED DECSCRIPTION OF ILLUSTRATIVE EMBODIMENTS

The description set forth below in connection with the appended drawings is intended to be a description of various, illustrative embodiments of the disclosed subject matter. Specific features and functionalities are described in connection with each illustrative embodiment; however, it will be apparent to those skilled in the art that the disclosed embodiments may be practiced without each of those specific features and functionalities.

Reference throughout the specification to "one embodiment" or "an embodiment" means that a particular feature, structure, or characteristic described in connection with an embodiment is included in at least one embodiment of the subject matter disclosed. Thus, the appearance of the phrases "in one embodiment" or "in an embodiment" in various places throughout the specification is not necessarily referring to the same embodiment. Further, the particular features, structures or characteristics may be combined in any suitable manner in one or more embodiments. Further, it is intended that embodiments of the disclosed subject matter cover modifications and variations thereof.

All of the functionalities described in connection with one embodiment are intended to be applicable to the additional embodiments described below except where expressly stated or where the feature or function is incompatible with the additional embodiments. For example, where a given feature or function is expressly described in connection with one embodiment but not expressly mentioned in connection with an alternative embodiment, it should be understood that the inventors intend that that feature or function may be deployed, utilized or implemented in connection with the alternative embodiment unless the feature or function is incompatible with the alternative embodiment.

At least the following details will become apparent from descriptions in this specification and of the accompanying drawings.

The present invention relates to an active voltage balancing circuit 100 for a plurality of supercapacitor cells *SCᵢ* connected in series within a supercapacitor bank 104.

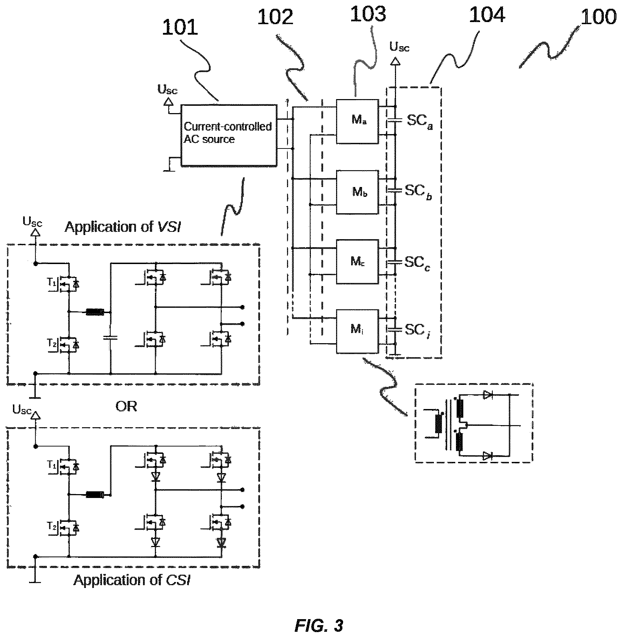

Figure 3 illustrates a simplified representation of the voltage balancing circuit 100 according to the present invention. The voltage balancing circuit 100 is supplied by the supercapacitor bank 104 comprising one or more parallel-connected branches, each branch comprising a plurality of series-connected supercapacitor cells *SCᵢ* and employs a current-controlled AC source 101 configured to regulate a magnitude of a balancing current to achieve a balanced voltage distribution among the plurality of series-connected supercapacitor cells *SCᵢ*. The balancing current is defined as a total current delivered and controlled by the voltage balancing circuit to the supercapacitor cells *SCᵢ*. The balancing current corresponds to a sum of an individual currents delivered by module units to the supercapacitor cells *SCᵢ* undergoing a balancing process. The voltage balancing circuit 100 and method are predicated on employing the current-controlled AC source 101, a common AC bus 102, and individual module units *Mᵢ*, each module unit *Mᵢ* is assigned to the respective supercapacitor cell *SCᵢ*. Each module unit *Mᵢ* comprises a transformer having a plurality of secondary windings and associated rectifying circuits. One of the key features of the present invention is that it eliminates a need for measuring a voltage of each supercapacitor cell *SCᵢ* by requiring only an overall voltage of the supercapacitor bank 104 to be measured. In addition, the balancing current is measured to enable a closed-loop current control.

Further, each parallel-connected branch comprises the same number of series-connected supercapacitor cells *SCᵢ*.

The reference signs "*Mₐ* to *Mᵢ*" or "*Mᵢ* "or 103 or 203 as used herein are used interchangeably and relate to "module unit" or "module units" or "plurality of module units".

The reference signs "*SCₐ* to *SCᵢ*" or "*SCᵢ* "or "103" or "plurality of series connected supercapacitor cells104a, 104b, 104n" or 208 or "plurality of series-connected supercapacitor cells 208a, 208b, 208c, 208i" as used herein are used interchangeably and relate to "supercapacitor cell" or "supercapacitor cells" or "plurality of series connected supercapacitor cells".

According to the present invention, the voltage balancing circuit 100 includes the current-controlled AC source 101 configured to generate the balancing current for the supercapacitor bank 104; the common AC bus 102; the plurality of module units 103 connected in parallel on a primary side; and the plurality of supercapacitor cells *SCᵢ*, connected in series forming the supercapacitor bank. Each supercapacitor cell *SCᵢ* is electrically paired with and connected in parallel to a secondary side of a corresponding module unit 103.

According to the present invention, the current-controlled alternating current (AC) source 101 comprises a current-controlled direct current-to-direct current (DC-DC) conversion circuit directly connected to the supercapacitor bank 104 and a direct current-to-alternating current (DC-AC) conversion circuit configured to convert a controlled DC current into an AC current, wherein the DC-AC conversion circuit is directly connected to the common AC bus 102 and, via the common AC bus 102, is connected to a plurality of module units (Mi), characterized in that the current-controlled DC-DC conversion circuit is configured to regulate the magnitude of the balancing current, and wherein the DC-AC conversion circuit is configured to generate an AC current supplied to the common AC bus 102.

Various embodiments of the present invention provide for a conversion of regulated DC current into AC current, wherein the DC-AC conversion circuit may be configured as either a Current Source Inverter (CSI) or a Voltage Source Inverter (VSI), or any other suitable inverter capable of performing the DC to AC conversion. In certain embodiments, the current-controlled AC source 101 comprises either the voltage source inverter 205 (VSI) or the current source inverter 205 (CSI) in combination with a DC-DC converter. An illustrative embodiment of the current-controlled AC source 101 is shown in Figure 3, wherein the VSI configuration is depicted as an alternative to the CSI configuration. Other suitable semiconductor devices may be employed in the CSI and VSI designs. The AC current may assume any appropriate alternating waveform.

In one embodiment, the current-controlled AC source 101 includes the DC-DC converter connected directly to the supercapacitor bank 104 and the voltage source inverter connected directly to the common AC bus 102 and via the common AC bus 102 is connected to the plurality of module units *Mᵢ*, said module units *Mᵢ* are further connected to the plurality of supercapacitor cells *SCᵢ*, wherein a respective module unit *Mᵢ* is assigned individually to the respective supercapacitor cell *SCᵢ*. The voltage source inverter (VSI) comprises two half-bridges, each constructed from two transistors. Output voltage nodes are established at midpoints of the half-bridges, and by alternately switching the transistors in each half-bridge, an alternating output waveform is generated.

In one embodiment, the current-controlled AC source 101 includes the DC-DC converter connected directly to the supercapacitor bank 104 and the current source inverter (CSI) connected directly to the common AC bus 102 and via the common AC bus 102 is connected to the plurality of module units *Mᵢ*, said module units *Mᵢ* re further connected to the plurality of supercapacitor cells *SCᵢ*, wherein a respective module unit *Mᵢ* is assigned individually to the respective supercapacitor cell *SCᵢ*.

The current source inverter (CSI) comprises two half-bridges. Each half-bridge is constructed from a semiconductor switch configuration that permits current flow in only one direction, for example, a series arrangement of a transistor and a diode. An inductor is connected in series with the parallel-connected half-bridges. Output voltage nodes are provided at the midpoints of the half-bridges. The semiconductor switches are operated such that the current through the inductor remains constant. An increase in the inductor current is achieved by simultaneously activating both semiconductor switches in one leg. In contrast to the voltage source inverter (VSI), which supplies a predetermined voltage at its output terminals, the CSI delivers a predetermined current.

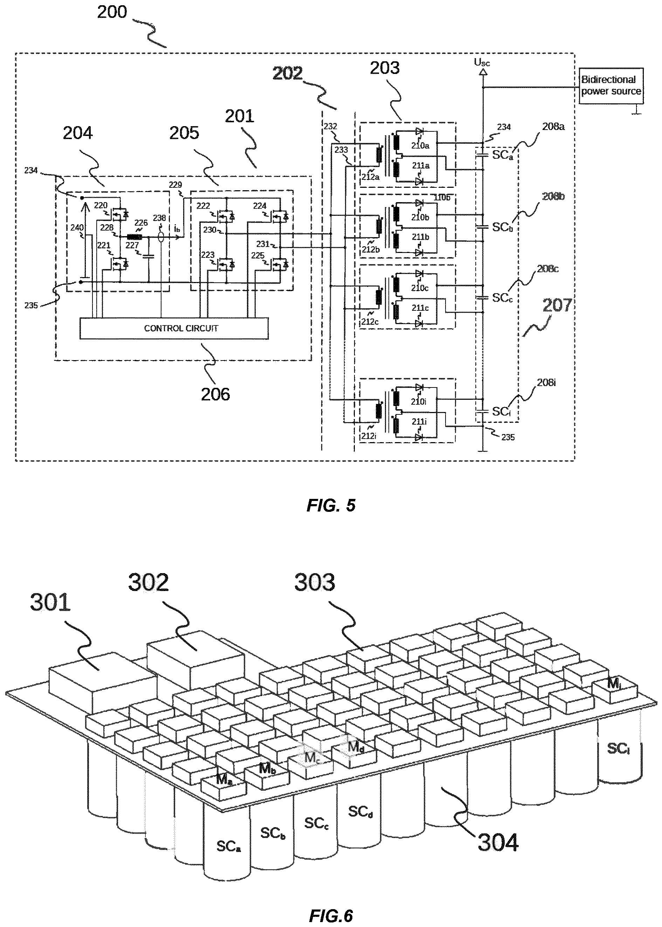

In some embodiments, the use of a VSI mitigates the effects of parasitic inductances in the voltage balancing circuit 200, thereby reducing voltage overshoots. In one embodiment, the current-controlled AC source 201 comprises a control circuit 206, illustrated in Fig. 5, for controlling of the balancing current trough an operation of the DC-DC converter and Voltage Source Inverter (VSI) or the DC-DC converter and Current Source Inverter (CSI).

In one embodiment, the control circuit 206 regulates the balancing current by controlling a DC-DC converter with some type of modulation, such as Pulse Width modulation (PWM) and some type of digital control loop such as PI controller. The control circuit 206 also controls the VSI in such a way that it generates alternating waveforms.

In various embodiments, the balancing current is provided and maintained by the DC-DC converter in the current-controlled AC source 101;201 by taking energy from the supercapacitor bank 104; 207.

In various embodiments, the control of DC-DC converter 204 and inverter 205 can be achieved in different ways, with discrete components or with integrated circuits such as a microcontroller unit (MCU).

In some embodiments, the balancing current reference value can be preset.

In some embodiments, when the current control is implemented by the microcontroller unit (MCU), the system is configured to allow external control of the balancing current, wherein the external control may be achieved through communication interfaces, input signals, or other external control methods. In some embodiments, the balancing current is measured, and the closed-loop control of the balancing current is employed.

According to another embodiment of the present invention, the balancing current reference value may be changed according to a charging current of the plurality of supercapacitor cells *SCᵢ*.

In some embodiments, the control circuit is configured to set the balancing current reference value using one or more of the following methods: (i) receiving the balancing current reference value from a superior system, (ii) utilizing a preset balancing current reference value stored within the control circuit, (iii) dynamically adjusting the balancing current reference value based on the charging current of the series-connected supercapacitors, or (iv) setting the balancing current reference value through manual input, external signal processing, or an optimization algorithm with objectives including, but not limited to, balancing speed, energy efficiency, thermal management, and overall system performance.

The current-controlled AC source 101; 201 draws the energy from the supercapacitor bank and transfers it to module units *Mᵢ* via the common AC bus 102; 202. The supercapacitor cells *SCᵢ* with lower voltages receive the energy from the common AC bus 102; 202. Furthermore, when all supercapacitor cells *SCᵢ* exhibit the same voltage, the current delivered by each module unit *Mᵢ* is uniform.

The voltage balancing circuit 100; 200 is configured to equalize the voltage across two or more supercapacitor cells *SCᵢ* connected in series. This is achieved by directing current from the current-controlled AC source 101; 201, through the module units *Mᵢ*, to the supercapacitor cells *SCᵢ* exhibiting lower voltage levels, continuing the voltage balancing until the uniform voltage distribution is attained across all supercapacitor cells *SCᵢ*.

The voltage balancing circuit 100; 200 is configured to allow current to flow from the common AC bus 102; 202 and over the module units *Mᵢ* from the supercapacitor bank 104; 207 to supercapacitors *SCᵢ* with a lower charge until all the supercapacitor cells *SCᵢ* have the same charge, or until a predetermined condition is met, wherein the predetermined condition may include a user-defined setting, a system-defined threshold, or any other operational requirement.

The voltage balancing circuit 100 illustrated in FIG. 3 equalizes voltages of the series of supercapacitor cells *SCᵢ* by using the current-controlled AC source 101, the common AC bus 102, transformers and rectifying circuits.

In one embodiment, the voltage balancing circuit 100 requires only the measured voltage of the supercapacitor bank 104, thereby obviating the need for direct voltage measurements across individual supercapacitor cells *SCᵢ*. The voltage balancing circuit 100 is configured to employ a bank-to-cell energy transfer mechanism that facilitates a simultaneous balancing of the plurality of the series-connected supercapacitor cells *SCᵢ*, ensuring an efficient operation and sufficient balancing speed. Each module unit *Mᵢ* comprises a transformer and a rectifying circuit, wherein each module unit *Mᵢ* is electrically connected to the respective supercapacitor cell *SCᵢ*. The supercapacitor cell *SC*ᵢ exhibiting the lowest voltage receives a highest share of the energy from the common AC bus 102 and predominantly influences the voltage level of the common AC bus 102. Over the course of the voltage balancing across all supercapacitor cells *SCᵢ*, the voltage of the common AC bus 102 increases in correlation with a rising voltage of the supercapacitor cell *SC*ᵢ having the initially lowest voltage. When a voltage equalization across all supercapacitor cells *SC*ᵢ is achieved, the voltage of the common AC bus 102 stabilizes and remains constant, equaling the voltage of each supercapacitor cell *SCᵢ*.

In various embodiments, the present invention can perform the voltage balancing across the supercapacitor cells *SCᵢ* of the supercapacitor bank 104 during charging, discharging or in standby.

In various embodiments, the voltage balancing is configured to operate only when necessary and to stop when the voltages on the supercapacitor cells *SC*ᵢ are in a balanced state or when a predetermined stopping condition is met, wherein the predetermined stopping condition may include a user-defined setting, a system-defined threshold, or any other operational requirement.

In accordance with the present invention, a voltage balancing method is provided to detect both the conditions wherein the balanced voltage distribution among the supercapacitor cells *SC*ᵢ is achieved and any deviations from that balanced state. In one embodiment, the voltage balancing method of the present invention is designed to determine when the voltage balancing is complete, thereby eliminating the need to measure the voltage of each individual supercapacitor cell *SCᵢ*. To detect both the completion of the voltage balancing and any voltage imbalance, the voltage balancing method utilizes various variables, including, but not limited to, an overall measured voltage of the supercapacitor bank 104; 207, the states of the DC-DC converter switches, and a number and configuration of the supercapacitor cells *SCᵢ*. Due to the approach described herein, the present invention provides a simplified and cost-effective solution for high-voltage, high-power applications, particularly for the supercapacitor banks 104; 207 comprising tens or hundreds of cells.

In one embodiment, each module unit *Mᵢ* comprises a dual-winding transformer and the rectifying circuit. The dual-winding transformer has two secondary windings with respect to a single primary winding. The two secondary windings are mutually isolated and each of the secondary windings is magnetically coupled to the primary winding. Each of the secondary windings is connected in series with a diode, and two branches, each comprising the secondary winding and the diode, are connected in parallel. In these branches, a polarity of the secondary windings is reversed relative to each other.

In one embodiment, each module unit *Mᵢ* comprises a transformer having a plurality of secondary windings and associated rectifying circuits. A number of parallelly connected secondary windings is even, preferably two secondary windings.

In one embodiment, each transformer secondary winding provides an AC current that is rectified by a respective rectifying circuit, thereby generating a DC current supplied to a respective supercapacitor cell *SCᵢ*. The primary windings of the transformers are electrically connected in parallel to the common AC bus 102, thereby ensuring an efficient energy distribution to the respective supercapacitor cells *SCᵢ*.

In one embodiment, when a transformer transfers the energy from its primary winding to its secondary winding, the voltage on the secondary side is scaled to the primary side according to the turn ratio of the transformer. Specifically, if the supercapacitor cell *SCᵢ* that exhibits the lowest voltage draws the current, the voltage on the primary winding of the associated transformer will equal the voltage of that cell plus the voltage drop across the rectifying circuit and parasitic elements, which also corresponds to the voltage of the common AC bus 102 to which the primary windings of all transformers are connected in parallel. Consequently, because the voltage of that supercapacitor cell *SCᵢ* is lower than the voltage of the other supercapacitor cells *SCᵢ*, the transformers in the other modules units 103 do not transfer the energy, as their corresponding rectifying circuits remain inactive when the supercapacitor cell voltage exceeds the voltage on the secondary winding of the transformer.

In one embodiment, two or more secondary windings of the transformers are connected to the respective supercapacitor cells *SCᵢ* via the respective rectifying circuits, wherein the alternating current is being supplied to the primary winding of each of the transformers.

In one embodiment, each module unit *Mᵢ* comprises a transformer and a rectifying circuit, each transformer having a primary winding and a secondary winding magnetically coupled to the primary winding in an isolated manner.

According to the one embodiment of the invention, the module unite may comprise an isolated transformer with one primary and one secondary winding and respective rectifying circuit may be bridge-rectifier called a Graetz bridge. The application of the Graetz bridge reduces the required number of windings on the transformer and enables easier serial production of transformers. Although easier serial production of transformers is facilitated, a higher voltage drop occurs across the bridge rectifier due to the simultaneous conduction of two diodes. Given that the operating voltages of supercapacitor cells *SCᵢ* may be below 1 V, the energy loss across the diodes is significant relative to the energy delivered to the supercapacitor cell.

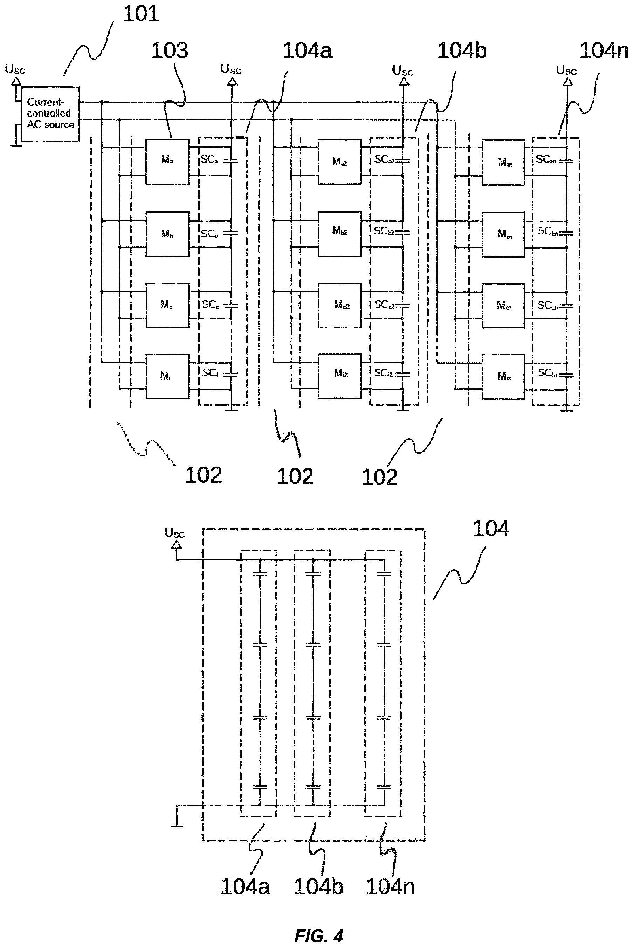

In another embodiment, the voltage balancing circuit 100 can be used for the supercapacitor bank 104 configured as one or more parallel-connected branches of series-connected supercapacitor cells *SCᵢ*, within applications such as backup power supplies, hybrid electric vehicles, grid fluctuation compensation, etc. Figure 4 illustrates an example embodiment of the voltage balancing circuit 100 configured within such a case, namely comprising more parallel-connected branches of series-connected supercapacitor cells *SCᵢ*.

Figure 4 schematically illustrates a simplified representation of the voltage balancing circuit, in which the supercapacitor bank 104 is configured as one or more parallel-connected branches 104a, 104b, 104n of the series-connected supercapacitor cells *SCᵢ*, in accordance with the present invention.

The present invention is applicable to such supercapacitor bank 104 configured as a plurality of parallel-connected branches of the series-connected supercapacitor cells *SCᵢ*. As illustrated in Fig. 4, each supercapacitor cell *SCᵢ* within each branch 104a, 104b, 104n of series-connected supercapacitor cells *SCᵢ* is connected to the respective module unit 103, which is connected on the primary side to the common AC bus 102 in parallel with other module units 103. The common AC bus 102 is, in turn, connected to the current-controlled AC source 101, facilitating efficient voltage balancing.

Figure 5 shows a preferable embodiment of the present invention for the plurality of series-connected supercapacitor cells 208a, 208b, 208c, 208i in case of the controlled current source 201 is based on the voltage source inverter.

The voltage balancing circuit 200 comprises the current-controlled AC source 201, the common AC bus 202, plurality of module units and supercapacitor bank 207, the supercapacitor bank 207 is configured as one or more parallel-connected branches of series-connected supercapacitor cells *SCᵢ*, each branch comprising the plurality of series-connected supercapacitor cells 208a, 208b, 208c, 208i. The voltage balancing circuit 200 is configured to maintain voltage balance across the supercapacitor cells within the supercapacitor bank 207. The voltage balancing circuit 200 is supplied by the supercapacitor bank 207. The supercapacitor bank 207 comprises the plurality of series-connected supercapacitor cells 208a, 208b, 208c, 208i, herein also denoted as 208 or *SCᵢ*. The supercapacitor bank 207 is electrically connected between an input voltage node 234 and a ground node 235. A bidirectional power source, which enables both charging and discharging of the supercapacitor bank 207, is external to the voltage balancing circuit 100;200 and does not form part of the present invention.

Each supercapacitor cell 208 is electrically connected in parallel with the respective module unit 203. The module unit 203 comprises the isolated transformer 212 having the primary winding and two secondary windings, along with two diodes 210 and 211, which operate to provide full-wave rectification. The number of module units 203 is equal to the number of supercapacitor cells 208. Diodes 210 and 211 have a first terminal electrically connected to the respective supercapacitor cell 208 and a second terminal electrically connected to the respective secondary winding of the transformer 212. The primary winding of the transformer 212 is electrically connected to a common AC bus 202. The common AC bus 202 comprises two electrical poles, 232 and 233, which are electrically connected to a current-controlled alternating current AC source 201.

In one embodiment, the primary voltage of the isolated transformer 212 is substantially equal to the voltage on the secondary side of the transformer 212, which equals the sum of the voltage of the respective supercapacitor cell 208 and the voltage drop across diode the 210 or diode 211, depending on which half of the AC voltage waveform is rectified. By having two secondary windings, it is possible to achieve full rectification with only two diodes, as for one half period of waveform conducts the diode 210 while for second half of period conducts the diode 211. Consequently, for current to flow from the primary side to the secondary side, the primary voltage must be slightly higher than the secondary voltage. When the voltage balancing is performed and one supercapacitor cell 208 exhibits the lower voltage level than the other supercapacitor cells 208, current is directed exclusively to that supercapacitor cell 208 because the AC bus voltage at the primary side of the transformer 212 approximates the voltage of the lowest supercapacitor cell 208 plus the voltage drop across parasitic elements, which is typically lower than the voltages of the other supercapacitor cells 208. Conversely, when all supercapacitor cells 208 exhibit substantially equal voltages, the balancing current is approximately equally distributed among the supercapacitor cells 208.

In various embodiments, the voltage balancing circuit 100; 200 and method may be employed during charging, discharging, or when the circuit is in a standby state.

In various embodiments, the voltage balancing circuit 100; 200 is configured to cease operation upon detection of the balanced voltage distribution among all cells, which is detected by the voltage balancing method.

The current-controlled AC source 201 comprises the DC-DC converter 204 and the Voltage Source Inverter (VSI) 205. The DC-DC converter 204 is connected on its high-voltage side to the supercapacitor bank 207 at the input voltage node 234 and the ground node 235. On the low-voltage side of the DC-DC converter 204, it is connected to the VSI 205, which is further connected to the common AC bus 202 through connection points i.e. voltage nodes 230 and 231.

In various embodiments, the DC-DC converter 204 may be implemented as a synchronous buck converter, which includes two transistors, 220 and 221, arranged to form a half-bridge configuration.

A voltage node 228 of the half-bridge is connected to a filter consisting of an inductor 226 and a capacitor 227. A measurement circuit 238 may be placed at the output of this filter, formed by the inductor 226 and the capacitor 227, to measure the balancing current, which corresponds to the current flowing through wire 229. Alternatively, other methods for measuring the balancing current can be employed, such as placing a shunt resistor in series with either transistor 220 or 221.

In one embodiment, the DC-DC converter 204 is employed to step down the supercapacitor bank voltage to a lower level (e.g., 1-3 V) to achieve more stable current control. In embodiments utilizing a voltage source inverter 205 (VSI), the DC-DC converter 204 operates in closed-loop current control, thereby controlling the balancing current. In some embodiments, the converter is controlled by switching transistors 220 and 221 in a complementary manner to achieve synchronous operation and improved efficiency. Said transistors are driven by voltage waveforms modulated by, for example, pulse width modulation (PWM), wherein the modulation index is determined based on the difference between a balancing current reference value and a measured balancing current, using the control circuit 206 such as a proportional-integral (PI) controller. In one embodiment, by adjusting the duty cycles of the switches, an average balancing current is regulated in accordance with the balancing current reference value. In some embodiments, the DC-DC converter 204 may be implemented with an isolated topology-such as flyback, forward, or dual active bridge-which may be more suitable for higher supercapacitor bank voltages.

In some embodiments, the control circuit (206) is configured to manage the operation of the DC-DC conversion circuit (204), the DC-AC conversion circuit (205), and the measurement circuits (238; 240).

In some embodiments, the voltage balancing circuit 100; 200 further comprises a voltage measurement circuit 240. The voltage measurement circuit 240 monitors a voltage differential between the input voltage node 234 and ground node 235 over time to determine whether the supercapacitor bank is charging or discharging. Based on this determination, the voltage balancing circuit is selectively activated or deactivated.

In various embodiments, the voltage balancing method is employed to determine whether voltage balancing has been achieved or if a voltage imbalance exists among the cells. The method utilizes the voltage measurement circuit 240 at the input voltage node 234 relative to the ground node 235 which represents the overall voltage of the supercapacitor bank 207 and the switching states of transistors 220 and 221 in the DC-DC converter 204 to estimate the converter output voltage. Because the DC-DC converter 204 operates in closed-loop current control, its output voltage depends on the voltage imbalance among the supercapacitor cells 208 and reaches a maximum when the supercapacitor cells 208 exhibit an equal voltage distribution. By accounting for the voltage drop across diodes 210 and 211, the voltage of an individual supercapacitor cell *SCi* may be estimated, wherein the common AC bus voltage approximates the sum of the lowest cell voltage and the voltage drops across parasitic elements, primarily the diodes 210 and 211. Furthermore, the estimated voltage of each supercapacitor cell *SCᵢ* when all cells are in a balanced state may be determined by dividing the measured voltage of the supercapacitor bank 207 by the number of series-connected supercapacitor cells *SCᵢ*. In one embodiment, upon detection of the equal voltage distribution among the supercapacitor cells 208, the voltage balancing across all supercapacitor cells 208 is terminated and deactivated until a subsequent charging or discharging cycle is detected, as indicated by changes in the supercapacitor bank voltage or by measurement of the charging/discharging current. The VSI 205 may be configured as two half-bridges, with the first half-bridge comprising transistors 222 and 223, and the second half-bridge comprising transistors 224 and 225. The voltage nodes 230 and 231 of the VSI 205 are connected to the common AC bus 202. In the embodiment depicted in FIG. 5, transistors 220, 221, 222, 223, 224, and 225 are illustrated as MOSFETs; however, other suitable types of semiconductor devices may be utilized in place of MOSFETs.

The voltage balancing circuit 200 may operate by extracting the energy from the supercapacitor bank 207 at voltage node 234 and ground node 235. The extracted energy is subsequently delivered through the module units 203 to the supercapacitor cells 208. The supercapacitor cells 208 exhibiting lower voltage levels are supplied with a greater amount of the energy, thereby compensating for the voltage imbalances and achieving voltage balancing among cells with disparate voltage levels. In one embodiment, as the energy circulates within the supercapacitor bank 207, the voltage balancing circuit 200 operates efficiently, with its efficiency dependent on the cumulative system losses. By constructing the transformers within the module units 203 with a minimal number of turns and using wires of larger cross-sectional area, transformer losses may be minimized and may be rendered negligible relative to the losses incurred by semiconductor switches, such as diodes.

The operation of both the DC-DC converter 204 and the voltage source inverter (VSI) 205 is controlled by the control circuit 206. In one embodiment, the DC-DC converter 204 is regulated by the complementary switching of transistors 220 and 221, wherein when transistor 220 is turned on, transistor 221 is turned off, and vice versa, thereby ensuring synchronous operation of the converter. In another embodiment, the function of the VSI 205 is to convert a controlled DC current into an AC current. In conjunction with DC-DC current control, the VSI 205 can generate various current waveforms, such as sinusoidal, triangular, or similar waveforms. For example, when transistors 222 and 225 are activated while transistors 223 and 224 remain deactivated, the voltage node 230 attains a higher potential than the voltage node 231. Conversely, when transistors 223 and 224 are activated while transistors 222 and 225 are deactivated, the voltage node 230 attains a lower potential than the voltage node 231. This alternating control of voltage levels at the nodes 230; 231 results in the generation of an alternating current waveform.

In one embodiment, a pulse width modulation (PWM) generator produces control signals for switching transistors 220 and 221, with the PWM modulation index determined by a controller. In various embodiments, the controller may be implemented as a proportional-integral (PI) controller, a hysteresis controller, or a fuzzy logic controller. Alternatively, various control techniques may be employed to generate the control signals for transistors 220 and 221, including, but not limited to, peak current control, or any other suitable control method. In voltage balancing circuits, the balancing current is configured to meet or exceed a predetermined balancing circuit reference value sufficient to fully compensate for voltage variations among the supercapacitor cells, thereby optimizing both balancing time and overall system efficiency.

In the present invention, the balancing current is actively controlled within a closed-loop configuration, wherein the balancing current is continuously measured and regulated.

In some embodiments, the balancing current is maintained at a constant level, with a balancing current reference value provided by a supervisory system or specified by a user. Alternatively, other configurations may be employed to provide the balancing current reference value, depending on system requirements and operational conditions.

In other embodiments, the balancing current reference value is dynamically adjusted in response to operating conditions, such as the charging current of the supercapacitor cells *SCᵢ*.

In certain embodiments, the balancing current reference value is calculated based on parameters including an age of the supercapacitor bank 207, deviations in cell capacity, or initial measurements of the supercapacitor bank 207; and when the capacities and charging currents of the supercapacitor cells 208 are known, the balancing current is calculated accordingly.

The control of VSI 205 may operate independently from the DC-DC converter 204; however, it is required to generate an alternating waveform between nodes 230 and 231. This can be accomplished by alternately switching between two states: one in which transistors 222 and 225 are turned on while transistors 224 and 223 are turned off, and the other in which transistors 222 and 225 are turned off while transistors 224 and 223 are turned on. An alternating current frequency is adjustable, and it can be determined to minimize EMC emissions and specify transformer characteristics.

In some embodiments, the supercapacitor bank 207 can be configured as a plurality of a parallel-connected branches of series-connected supercapacitor cells 208.

In various embodiments, voltage balancing is achieved during any operational mode of the supercapacitor bank, including charging, discharging, or standby. In this context, 'standby' denotes a state in which neither charging nor discharging is active.

In various embodiments, the control circuit 206 is configured to set the balancing current reference value through one or more of the following methods: (i) receiving the balancing current reference value from a superior system, (ii) utilizing a preset balancing current reference value set within the control circuit 206, (iii) dynamically adjusting the balancing current reference value based on the charging current of the plurality of supercapacitors (SCi), or (iv) applying alternative methods, including but not limited to manual input, external signal processing, or an optimization algorithm with various objectives, such as, but not limited to, balancing speed, energy efficiency, thermal management, overall system performance, or any other desired operational criteria.

Figure 6 schematically illustrates the supercapacitor bank 207 in accordance with one embodiment of the present invention.

The module units *M₁* to *Mᵢ* can be located on a top side of a PCB (printed circuit board) and the supercapacitor cells *SCᵢ* on a bottom side as illustrated in Fig 6. Each module unit 303 is located on the top side of the PCB, and each supercapacitor cell 304 is located on the bottom side. The current-controlled AC source 301 and the control circuit 302 can also be located on the top side of the PCB.

The present invention further relates to a voltage balancing method of a supercapacitor bank system. A supercapacitor bank 104; 207 comprises the plurality of series-connected supercapacitor storage cells *SCᵢ* which may also be configured as one or more of parallel-connected branches of the plurality of series-connected supercapacitor cells *SCᵢ*, wherein a current-controlled AC source 101; 201 is applied, as illustrated in Figures 3 and 5. The invention pertains in particular to the voltage balancing, by which is meant an equalizing of different voltages between the plurality of series-connected supercapacitor cells *SCᵢ* which are used in the supercapacitor system, said series-connected supercapacitor cells *SCᵢ* can be arranged in one or more parallel-connected branches of the series-connected supercapacitor cells *SCᵢ*.

The voltage balancing method of the supercapacitor bank system comprising the steps of:
providing of a plurality of series-connected supercapacitor cells *SCᵢ* forming the supercapacitor bank 104; 207, the supercapacitor bank 104; 207 comprising one or more parallel-connected branches, each branch comprising the plurality of series-connected supercapacitor cells *SCᵢ*, where the supercapacitor bank 104; 207 is connected to a bidirectional power source for charging and discharging the supercapacitor bank 104; 207;
providing a plurality of module units *Mᵢ* connected in parallel, wherein each supercapacitor cell *SCᵢ* of the plurality of supercapacitor cells *SCᵢ* is being electrically connected to and associated with a corresponding module unit *M*_{*i*,} wherein each module unit *Mᵢ* comprising a transformer with two secondary windings being assigned individually to a respective rectifying circuit;
providing of a common AC bus 102; 202, wherein a primary side of each module unit *Mᵢ* is connected to the common AC bus 102; 202 and a secondary side of each module unit *Mᵢ* is connected to a respective supercapacitor cell *SCᵢ*;
providing a current-controlled AC source 101; 201 supplied by the supercapacitor bank 104; 207 and connected directly to the common AC bus 102; 202, the current-controlled AC source 101; 201 comprises a current-controlled DC-DC conversion circuit 204 connected directly to the supercapacitor bank 104; 207, a DC-AC conversion circuit 205 configured for converting a controlled DC current into an AC current and connected directly to the common AC bus 102; 202 and via the common AC bus 102; 202 is connected to the plurality of module units *M*_{*i*,} wherein the current-controlled AC source 101; 201 further comprising a control circuit (206) configured to control the operation of the DC-DC conversion circuit and measurement circuits 238; 240;
supplying a balancing current controlled to follow a balancing current reference value by the current-controlled AC source 101; 201, wherein the balancing current is achieved by applying a voltage across the plurality of module units *Mᵢ*, wherein the applied voltage is controlled by a current control method configured to dynamically adjust the voltage to maintain the balancing current at the reference value, wherein an energy transfer and a voltage balancing of the supercapacitor bank system is accomplished by the following steps:
   a) continuously measuring, by the voltage measurement circuit (240), a voltage of the supercapacitor bank (104; 207), said voltage is measured between an input voltage node (234) and a ground node (235) of the supercapacitor bank (104; 207) over a predetermined time period, wherein the measured voltage is utilized for estimating a balanced state and determining an operational mode of the supercapacitor bank (104; 207), the operational mode including a charging mode, a discharging mode, or a standby mode;
   b) considering the measured voltage of the supercapacitor bank 104; 207, estimating a voltage of the common AC bus 102; 202 that would result if an even voltage distribution across all supercapacitor cells *SCᵢ* is achieved, the even voltage distribution is indicating the supercapacitor bank 104; 207 is in the balanced state;
   c) calculating a duty cycle of the current-controlled DC-DC conversion circuit based on the balancing current reference value and a measured output current of the DC-DC conversion circuit 204, wherein the calculated duty cycle and the measured voltage of the supercapacitor bank (104; 207) are used to estimate the voltage of the common AC bus 102; 202 as if the calculated duty cycle were applied;
   d) considering the measured voltage of the supercapacitor bank 104; 207, the estimated voltage of the common AC bus 102; 202, and system settings, and determining whether the voltage balancing will be performed;
   e) it the voltage balancing will be performed, extracting energy from the plurality of supercapacitors *SCᵢ* through the current-controlled DC-DC conversion circuit 204 by applying the calculated duty cycle of the DC-DC conversion circuit 204 and transferring the energy to the DC-AC conversion circuit as a controlled DC current, wherein the DC current is regulated by a current control method configured to match the balancing current reference value with the measured output current of the DC-DC converter 204;
   f) receiving the energy from the common AC bus (102; 202) by one or more supercapacitor cells *SC*ᵢ having a lowest voltage through the respective module units *Mᵢ*, to which said supercapacitor cell *SC*ᵢ are connected and transforming energy from the primary side of the transformer to the secondary side of the transformer, and supplying the current to said supercapacitor cells *SCᵢ* via the rectifier circuits; and
   g) repeating of steps a) to f) until an absolute difference between the estimated voltage of common AC bus (102; 202) and the estimated voltage of common AC bus (102; 202) in balanced state is lower than a threshold voltage.

The balancing current is configured to achieve a value sufficient to fully compensate for voltage variations among the supercapacitor cells, thereby optimizing both a balancing time and overall system efficiency, wherein the balancing current, which corresponds to the output current of the DC-DC conversion circuit 204, is actively controlled within a closed-loop control system, and wherein the balancing current is continuously measured by the current measurement circuit 238 and regulated by the current control method.

The balancing current is controlled by a control circuit 206 configured to implement the current control method, wherein the control circuit (206) receives a balancing current reference value from a superior system.

The voltage balancing method further comprising determining and receiving a preset balancing current reference value, wherein the preset balancing current reference value is configured to set a target balancing current sufficient to fully compensate for voltage variations among all supercapacitor cells *SCᵢ*.

Changing the balancing current reference value is performed according to a charging current of the plurality of supercapacitors *SCᵢ*.

The primary side of each module unit *Mᵢ* is connected to a common AC bus 102; 202 and the secondary side of each module unit *Mᵢ* to a respective supercapacitor cell *SCᵢ*; wherein the current-controlled AC source 101 comprises a DC-DC converter 204, an inverter 205, a control circuit 206 and measurement circuits 238; 240, wherein a current measurement circuit 238 of the output current of DC-DC converter 204 is configured for a closed-loop current control, and the voltage measurement circuit 240 is configured for measuring the voltage differential between the input voltage node 234 and ground node 235 over time for estimating a balanced state and an operational mode of the supercapacitor bank 104; 207, wherein the operational mode of the supercapacitor bank 104; 207 includes charging, discharging or a standby mode.

Step of applying of a voltage across the plurality of module units *Mᵢ*, wherein a magnitude of the applied voltage is determined by a current control method and is dependent on the operational mode of the module units *Mᵢ* connected to the common AC bus 102; 202, wherein the operating mode of module units *Mᵢ* is a function of a voltage distribution across the supercapacitor cells *SCᵢ* and includes two possible states: (i) an energy-supply mode in which a module unit *Mᵢ* supplies the energy to its corresponding supercapacitor cell *SCᵢ*, and (ii) a non-supply mode in which the module unit *Mᵢ* does not supply the energy because the rectifying circuit is not activated due to a prevailing voltage conditions.

Method of the present invention includes continuously measuring the voltage of the supercapacitor bank 104; 207 by voltage measurement circuit 240 and determining the operational mode of the supercapacitor bank 104; 207 based on a voltage change of supercapacitor bank 104; 207 over a predetermined time period.

Further, the method includes considering the measured voltage of the supercapacitor bank 104; 207, estimating the voltage of the common AC bus 102; 202 that would result if an even voltage distribution across all supercapacitor cells *SCᵢ* is achieved, the even voltage distribution is indicating the supercapacitor bank104; 207 is in the balanced state.

In some embodiments, a voltage unbalance detection is based on a comparison between an estimated common AC bus 102; 202 voltage during operation and the estimated common AC bus 102;202 voltage in a balanced state, wherein both voltage estimations are derived using the measured voltage of the supercapacitor bank 104; 207.

The balancing current reference value may be calculated, estimated, or taken as necessary. The balancing current reference value can be generated in various ways, including but not limited to: maintaining it constant, estimating it based on the charging or discharging current, obtaining it from a supervisory system, estimating it according to various criteriums (e.g., maximizing balancing speed, minimizing energy losses), or employing any other suitable method. Calculating the duty cycle of the DC-DC converter 204 based on the balancing current reference value and the measured current from the previous step. Using the calculated duty cycle and the measured voltage of the supercapacitor bank104; 207, estimating the voltage of the common AC bus 102; 202 as if the calculated duty cycle were applied.

According to the invention the method includes considering the measured voltage of the supercapacitor bank 104; 207 and estimated common AC bus voltages, as well as system settings and specified conditions, and determining whether the voltage balancing will be performed. This may involve comparing an estimated common AC bus voltage from step c) with the estimated voltage of the AC bus 102; 202 in the balanced state from step b), while considering additional conditions as necessary. If the balancing is interrupted, the voltage balancing process returns to step a). If balancing continues, the calculated duty cycle is applied to the switches, and balancing current is generated.

Taking the energy from the plurality of supercapacitor cells *SCᵢ* through the DC-DC converter 204 by applying the calculated duty cycle and transferring the energy to the inverter 205 in the form of a controlled DC current, wherein the controlled DC current is regulated to match the balancing current reference value by measuring the output current of the DC-DC converter (204) and applying a current control method.

Taking over the energy from the common AC bus 102; 202 by the supercapacitor cells *SC*ᵢ having the lowest voltage through the respective module unit *Mᵢ*, to which said supercapacitor cell *SC*ᵢ is connected and transforming the energy from the primary side of the transformer to the secondary side of the transformer in the respective module unit *Mᵢ*, and feeding the current to said supercapacitor cells *SCᵢ* via the rectifier circuit,

Repeating of steps a) to f) until the absolute difference between the estimated voltage of common AC bus 102; 202 and the estimated voltage of common AC bus in the balanced state is lower than a threshold voltage. The threshold voltage is defined as a tolerance value used to determine the balanced state of the system. The balanced state is achieved when the estimated voltage is within a range defined by the estimated voltage of the common AC bus when all supercapacitor cells are in balance, plus or minus the threshold voltage.

The plurality of supercapacitors *SCᵢ* is connected to the bidirectional power source which can be power charger, power source, power consumer, or the combination thereof.

When all of the supercapacitor cells *SCᵢ* have the same voltage, each supercapacitor cell *SCᵢ* draws the same amount of the current through the module.

According to one embodiment of the present invention, a microcontroller is used as control circuit.

According to another embodiment of the present invention, the method comprises determining and receiving a preset balancing current reference value, wherein the balancing current reference value is a required amount of current at which a complete compensation of an effect of the difference between the supercapacitor parameters is achieved.

In a further embodiment, changing of the balancing current reference value is performed according to a charging current of the plurality of supercapacitor cells *SCᵢ*.

## Claims

1. A supercapacitor bank system includes:
a supercapacitor bank (104; 207) comprising one or more parallel-connected branches, each branch comprising a plurality of series-connected supercapacitor cells *SCᵢ*,
a voltage balancing circuit (100; 200) comprising:
- current-controlled AC source (101; 201) configured to supply a balancing current to the plurality of series-connected supercapacitor cells *SCᵢ* forming a supercapacitor bank (104; 207), wherein the supercapacitor bank (104;207) is connected to a bidirectional power source for charging and discharging, and wherein the current-controlled AC source (101; 201) is supplied by the supercapacitor bank (104; 207);
- a common AC bus (102; 202);
- a plurality of module units *Mᵢ*, wherein all module units *Mᵢ* are connected in parallel to the common AC bus (102; 202) on one side, and each module unit *Mᵢ* is connected to a respective supercapacitor cell *SCᵢ* on another side, wherein a number of module units *Mᵢ* is equal to a total number of supercapacitor cells *SCᵢ*;
wherein the current-controlled AC source (101; 201) is connected directly to the common AC bus (102; 202), the current-controlled AC source (101; 201) comprises a current-controlled DC-DC conversion circuit (204) connected directly to the supercapacitor bank (104; 207), a DC-AC conversion circuit (205) configured to convert a controlled DC current into an AC current and connected directly to the common AC bus (102; 202) and via the common AC bus (102; 202) is connected to the plurality of module units *Mᵢ*, **characterized by that**
the current-controlled DC-DC conversion circuit (204) is configured to regulate a magnitude of the balancing current, wherein the DC-AC conversion circuit is configured to generate an AC current supplied to the common AC bus (102; 202); and
the voltage balancing circuit (100; 200) is configured to balance an uneven voltage distribution across the plurality of series-connected supercapacitor cells *SCᵢ* by conducting the balancing current from the supercapacitor bank (104; 207) to one or more series-connected supercapacitor cells *SCᵢ* with a lower voltage through the plurality of module units *Mᵢ* while detecting a voltage unbalance, wherein said voltage unbalance detection is based on a comparison between an estimated common AC bus (102; 202) voltage during operation and the estimated common AC bus (102;202) voltage in a balanced state, wherein both estimations are derived using a measured voltage of the supercapacitor bank (104; 207), wherein the series-connected supercapacitor cells *SC*ᵢ with the lower voltage receive an energy from the common AC bus (102; 202), and wherein when an even voltage distribution across all supercapacitor cells *SCᵢ* is achieved, all supercapacitor cells *SCᵢ* receive the energy from the common AC bus (102; 202), which is supplied by an alternating current form the current-controlled AC source (101; 201).

2. The supercapacitor bank system according to claim 1, wherein the DC-DC conversion circuit includes the DC-DC converter (204) and a DC-AC conversion circuit includes a Current Source Inverter (205).

3. The supercapacitor bank system according to claim 1, wherein the DC-DC conversion circuit includes the DC-DC converter (204) and the DC-AC conversion circuit includes a Voltage Source Inverter (205).

4. The supercapacitor bank system according to claim 1, wherein each module unit *Mᵢ* includes a transformer and a rectifying circuit, each transformer having a primary winding and two or more secondary windings magnetically coupled to the primary winding in an isolated manner, wherein the number of secondary windings is even, and each secondary winding is connected in series with the rectifying circuit forming a branch, with each pair of branches, each comprising a secondary winding and a diode, connected in parallel; wherein a polarity of the secondary windings within a pair of branches is reversed relative to each other.

5. The supercapacitor bank system according to claim 1, wherein the current-controlled AC source (101; 201) further comprises a control circuit (206) configured to control the switches of the DC-DC conversion circuit (204) and the switches of the DC-AC conversion circuit (205), and further comprising measurement circuits (238; 240).

6. The supercapacitor bank system according to claim 5, wherein the measurement circuit (238) comprises a current measurement circuit (238) configured to measure an output current of DC-DC conversion circuit (204) for implementing closed-loop current control, and wherein the measurement circuit (240) comprises a voltage measurement circuit (240) configured to measure a voltage differential between an input voltage node (234) and a ground node (235) of the supercapacitor bank (104; 207) for estimating the balanced state and an operational mode of the supercapacitor bank (104; 207), wherein the operational mode of the supercapacitor bank (104; 207) includes charging, discharging or standby modes, and the balanced state is achieved when an estimated voltage of the common AC bus (102; 202) is within a predefined range defined by an estimated voltage of the common AC bus (102; 202) when all supercapacitor cells *SCᵢ* are in balance, plus or minus a threshold voltage.

7. The supercapacitor bank system according to claim 5, wherein the control circuit (206) is configured to receive a balancing current reference value from a superior system, or to utilize a preset balancing current reference value set within the control circuit (206), or to dynamically adjust the balancing current reference value based on a charging current of the plurality of series-connected supercapacitors *SCᵢ*, or wherein the balancing current reference value is set by a manual input, external signal processing, or through an optimization algorithm with objectives including, but not limited to, balancing speed, energy efficiency, thermal management, and overall system performance.

8. A voltage balancing method of a supercapacitor bank system, the method comprising the steps of:
- providing of a plurality of series-connected supercapacitor cells *SCᵢ* forming a supercapacitor bank (104; 207), the supercapacitor bank (104; 207) comprising one or more parallel-connected branches, each branch comprising the plurality of series-connected supercapacitor cells *SCᵢ*, wherein the supercapacitor bank (104;207) is connected to a bidirectional power source for charging and discharging;
- providing of a plurality of module units *Mᵢ* connected in parallel, each of the plurality of supercapacitor cells *SCᵢ* being electrically connected and associated with a respective module unit *Mᵢ*, wherein each of the module units *Mᵢ* comprises a transformer and a rectifying circuit;
- providing of a common AC bus (102; 202), wherein a primary side of each module unit *Mᵢ* is connected to the common AC bus (102; 202) and a secondary side of each module unit *Mᵢ* is connected to a respective supercapacitor cell *SCᵢ*;
- providing a current-controlled AC source (101; 201) supplied by the supercapacitor bank (104; 207) and connected directly to the common AC bus (102; 202), the current-controlled AC source (101; 201) comprises a current-controlled DC-DC conversion circuit (204) connected directly to the supercapacitor bank (104; 207), a DC-AC conversion circuit (205) configured for converting a controlled DC current into an AC current and connected directly to the common AC bus (102; 202) and via the common AC bus (102; 202) is connected to the plurality of module units *M*_{*i*,} wherein the current-controlled AC source (101; 201) further comprising a control circuit (206) configured to control the operation of the DC-DC conversion circuit, the DC-AC conversion circuit and measurement circuits (238; 240);
- supplying a balancing current controlled to follow a balancing current reference value by the current-controlled AC source (101; 201), wherein the balancing current is achieved by applying a voltage across the plurality of module units (Mi), wherein the applied voltage is controlled by a current control method configured to dynamically adjust the voltage to regulate the balancing current in accordance with the balancing current reference value, and wherein an energy transfer and a voltage balancing of the supercapacitor bank system are accomplished by the following steps:
a) continuously measuring, by the voltage measurement circuit (240), a voltage of the supercapacitor bank (104; 207), said voltage is measured between an input voltage node (234) and a ground node (235) of the supercapacitor bank (104; 207) over a predetermined time period, wherein the measured voltage is utilized for estimating a balanced state and determining an operational mode of the supercapacitor bank (104; 207), the operational mode including a charging mode, a discharging mode, or a standby mode;
b) considering the measured voltage of the supercapacitor bank (104; 207), estimating a voltage of the common AC bus (102; 202) that would result if an even voltage distribution across all supercapacitor cells *SCᵢ* is achieved, the even voltage distribution is indicating the supercapacitor bank (104; 207) is in the balanced state;
c) calculating a duty cycle of the current-controlled DC-DC conversion circuit based on the balancing current reference value and a measured output current of the DC-DC conversion circuit (204), wherein the calculated duty cycle and the measured voltage of the supercapacitor bank (104; 207) are used to estimate the voltage of the common AC bus (102; 202) as if the calculated duty cycle were applied;
d) considering the measured voltage of the supercapacitor bank (104; 207), the estimated voltage of the common AC bus (102; 202), and system settings, and determining whether the voltage balancing will be performed;
e) it the voltage balancing will be performed, extracting energy from the plurality of supercapacitors *SCᵢ* through the current-controlled DC-DC conversion circuit (204) by applying the calculated duty cycle of the DC-DC conversion circuit (204) and transferring the energy to the DC-AC conversion circuit as a controlled DC current, wherein the DC current is regulated by the current control method configured to match the balancing current reference value with the measured output current of the DC-DC converter (204);
f) receiving the energy from the common AC bus (102; 202) by one or more supercapacitor cells *SC*ᵢ having a lowest voltage through the respective module units *Mᵢ*, to which said supercapacitor cell *SC*ᵢ are connected and transforming energy from the primary side of the transformer to the secondary side of the transformer, and supplying the current to said supercapacitor cells *SCᵢ* via the rectifier circuits; and
g) repeating of steps a) to f) until an absolute difference between the estimated voltage of common AC bus (102; 202) and the estimated voltage of common AC bus (102; 202) in balanced state is lower than a threshold voltage.

9. The voltage balancing method according to claim 8, wherein the balancing current is configured to achieve a value sufficient to fully compensate for voltage variations among the supercapacitor cells, thereby optimizing both a balancing time and overall system efficiency, wherein the balancing current, which corresponds to the output current of the DC-DC conversion circuit (204), is actively controlled within a closed-loop control system, and wherein the balancing current is continuously measured by the current measurement circuit (238) and regulated by the current control method.

10. The voltage balancing method according to claim 8, wherein the balancing current is controlled by a control circuit (206) configured to implement the current control method, wherein the control circuit (206) receives a balancing current reference value from a superior system.

11. The voltage balancing method according to claim 8, wherein further comprising determining and receiving a preset balancing current reference value, wherein the preset balancing current reference value is configured to set a target balancing current sufficient to fully compensate for voltage variations among all supercapacitor cells *SCᵢ*.

12. The voltage balancing method according to claim 8, wherein changing the balancing current reference value is performed according to a charging current of the plurality of supercapacitors *SCᵢ*.
